# EUROPEAN PATENT SPECIFICATION

(11) **EP 3 428 567 B1**
(45) Date of publication and mention of the grant of the patent: **16.12.2020**
(21) Application number: 17461566.6
(22) Date of filing: 13.07.2017
(51) Int. Cl.: F28F 9/02, F16J 15/00

(54) **A HEAT EXCHANGER**
WÄRMETAUSCHER
ÉCHANGEUR DE CHALEUR

(43) Date of publication of application: 16.01.2019
(73) Proprietor: Valeo Autosystemy SP. Z.O.O., 32-050 Skawina (PL)
(72) Inventor: KLUSEK, Maciej, 32-050 Skawina (PL); ROD, Janusz, 32-050 Skawina (PL); BIENIEK, Robert, 32-050 Skawina (PL); JONCZYK, Radoslaw, 32-050 Skawina (PL)
(74) Representative: Bialkowski, Adam

(56) References cited:
- EP-A1- 0 504 650
- DE-A1-102013 101 263
- FR-A1- 2 984 475
- GB-A- 2 292 451
- JP-U- S53 150 556

## Description

The invention relates to a heat exchanger with a header tank, particularly for a motor vehicle.

The invention may be useful in automotive application, more preferably a radiator or charger air cooler, (CAC), more preferably a charge air cooler or the like.

A heat exchanger, for example used in the car industry and more exactly in a heat combustion engine in a motor vehicle, includes heat exchange components and fluid flow components in which the fluids circulate exchanging heat between them. The heat exchange components can comprise, for example, tubes, plates, fins and flow agitators, etc. Numerous structural configurations are conceivable. For example, the exchanger can comprise a core of tubes arranged in parallel one with respect to the other in one or several rows which are also parallel, said tubes being designed to convey a first fluid, whilst a second fluid flows between the tubes and exchanges heat with the first fluid. Numerous fluid associations can be conceived, whether they be liquids and/or gases.

The exchanger includes a housing for receiving the tubes, said housing including a plurality of walls forming the volume in which the tubes are received. It is generally open at its two ends so that the tubes can be connected to the fluid collection or distribution tanks also called collecting tanks: one input collecting tank and one output collecting tank. The first fluid flows in the tubes from the input collecting tank toward the output collecting tank. The second fluid flows around the tubes, from an input pipe toward an output pipe, and exchanges heat with the first fluid.

Instead of housing there can be provided reinforcement plates on the sides of the heat exchanger.

The exchanger generally also includes two collecting plates for holding the tubes, the fluid collecting tanks being mounted on the collecting plates. The tubes pass through openings arranged in the collecting plates and open out into the fluid collecting tanks.

A collecting tank generally comprises at least two parts: a collector plate that accepts the ends of the tubes and a tank that is fixed to the collector plate to close the collecting tank. All-metal collecting tanks are known as are, alternatively, tanks with a cover made of plastic.

The type of collecting tank that has a tank made of plastic requires a sealing means, conventionally an elastic gasket, to provide a perfectly sealed joint between the tank and the collector plate. This may be a case also for all-metal collecting tanks.

The collector plate may have a groove or slot in which the sealing means is placed and positioned. The tank cover is then positioned on the sealing means, after which the tank cover is fixed to the collector plate to close the collecting tank. The sealing means, for example a gasket, are disposed therebetween to provide a fluid-tight seal of the tank-to-collector joint.

In some known solutions, a gasket is placed between a foot of a tank and a collector plate. Subsequently, the foot of the tank is crimped by tabs of the collector plate, thereby sealing the arrangement. Often the gasket during and after compression is susceptible to changing its position, which may lead to deterioration of sealing properties.

The gasket is made of a material which slightly deforms upon pressure. Selection of gasket type and material takes into account many factors, such as its desired placement, chemical resistance, heat resistance, strength and cost. Exemplary materials of gaskets utilized to seal a joint between the tank and the collector plate are elastomers which comprise a certain degree of elasticity. Different kinds of gaskets are generally used, for example with circular cross-section or a shaped cross-section.

Another problem is an excessive filling rate of the gasket within its placement in the foot of a tank. If a desired level of gasket compression is to be achieved, e.g. 40% of its diameter (a percentage of the gasket's original thickness), then the filling rate of its intended groove may reach 140% (that is, 40% of the gasket material may escape beyond a groove with analogous volume). This may lead to undesired displacement of the tank with respect to the cover plate, and may deteriorate sealing function of the arrangement in unpredictable rate. The pressure will be exerted onto the wall of the tank, which may lead to pushing the tank away from the header plate and partial opening of the crimped tabs (teeth). Furthermore, if the gasket material is exposed to fluids (such as engine oil, condensate from EGR), it can swell, which will further increase the pressing force. If the gasket becomes excessively compressed, it can be damaged. Excessive filling rate can also lead to contact between foreign matter and the gasket, for example salt, condensates, that cause gasket swelling.

A heat exchanger comprising a tank and a collector plate with the features in the preamble of claim 1 is disclosed for example in the documents GB 2292451 A (see the Figs.) or in JP S53 150556U (see Fig. 2).

It is therefore an object of the present invention to provide a heat exchanger with improved sealing.

The object of the invention has been shown by means of a drawing, in which:
Fig. 1 shows an example of a heat exchanger;
Fig. 2 shows an arrangement according to the invention;
Figs. 3a, 3b show an arrangement according to the invention in a detailed view.
Fig. 4 presents another example of the invention.
Fig. 5a-f present further examples of the invention.

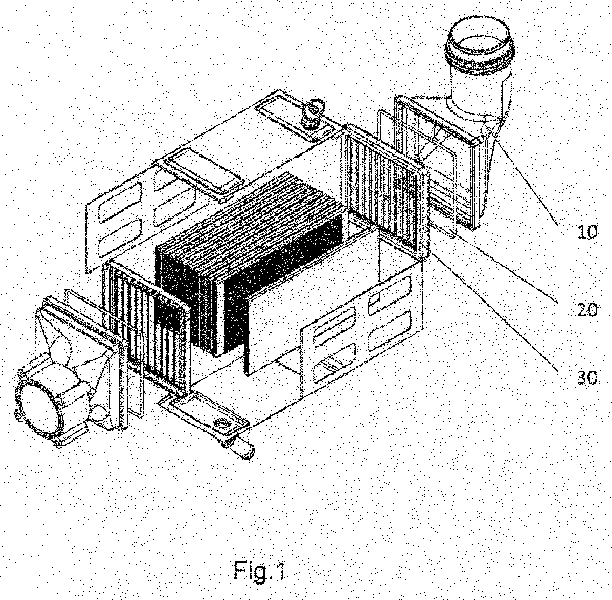

Fig. 1 presents an exemplary heat exchanger. The heat exchanger comprises a tank 10 and a collector 30 assembled together, joined for example during crimping. Between them there is placed a gasket 20. By collector it is meant for example a collector plate. It can however be also a collector, a flange etc.

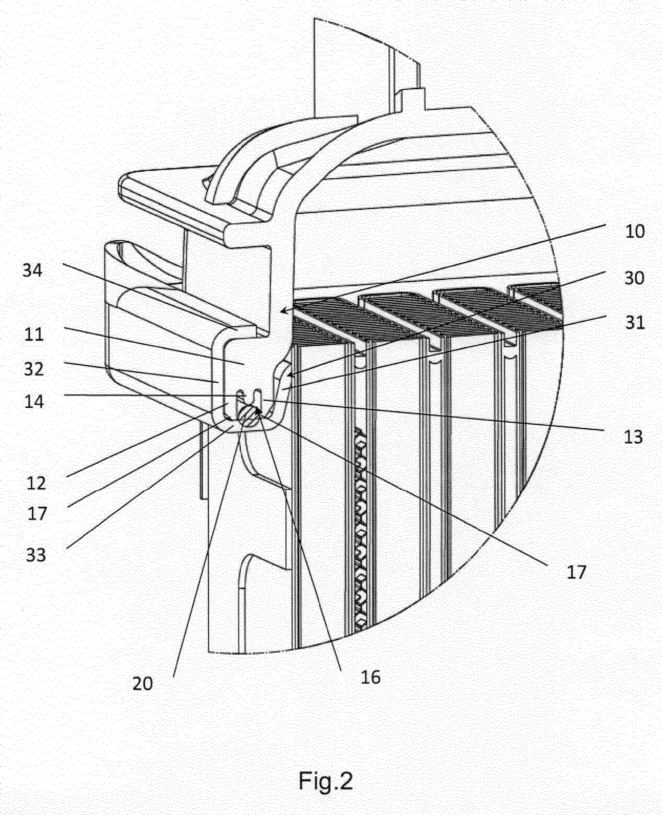

Fig. 2 shows an arrangement according to the invention. The tank 10 comprises a foot 11, which is placed inside the receiving groove of the collector 30. The receiving groove of the collector 30 here is in the shape of a U over at least part of the periphery of the collector and comprises a base and two flanges 31, 32 these respectively being an inner flange 31 and an outer flange 32 both of which are connected to the base. This base is hereinafter referenced to as a foot receiving surface 33. The outer flange 32 comprises tabs 34, which are designed to be crimped onto the foot 11 of the tank 10, so that the tank 10 and the collector 30 are immobilized with respect to each other and so that a desired compression of the gasket 20 is provided. The outer flange 32 of the collector 30 preferably is continuous around the periphery of the collector 30. The foot 11 of the tank 10 comprises a groove 16 intended for placement of the gasket 20, which is incorporated to provide sealing.

The groove 16 of the tank 10 comprises two side walls 12, 13 and a bottom wall. Preferably, the side walls 12, 13 of the groove 16 are parallel to each other. Preferably, side walls 12, 13 are flat. The foot receiving surface 33 is then perpendicular to the side walls 12, 13 of the groove 16.

As the tabs 34 of the outer flange 32 are crimped over the tank foot 11, the bottom of the groove 16 is forced down against the top of the gasket 20 towards the foot receiving surface 33. These forces cause the gasket 20 to be deformed so that the gasket 20 fills the region between the groove's side walls 12, 13 and the foot receiving surface 33. Sealing stress is created as the gasket material pushes out radially against the constraining surfaces of the foot 11 and the foot receiving surface 33. The groove 16 is faced by a foot receiving surface 33 so that together they form a closed cavity within the foot 11 defining a compression volume for the gasket 20.

In known solutions, the gasket 20 can extend at least partially beyond the groove 16 of the foot 11 after assembly and compression.

The groove 16 of the foot 11 has been provided with a compression arrangement, which aims to assure prevention of excessive filling rate.

A filling volume provided by the compression arrangement assures (is configured to provide) gasket filling rate δ inside the groove after assembly at selected level below 100%. More preferably, this level is ≤90%, to ensure prevention of disadvantageous effects of gasket swelling. By means of filling rate δ it is meant a percentage of a groove volume which is filled by the gasket material after assembly. A compression arrangement inside groove 16, which provides a desired compression rate α of the gasket 20, assures enough free area for gasket to fill the groove and provide desired filling rate.

An example of the compression arrangement is a protrusion 14, protruding towards the foot receiving surface 33 from the bottom wall of the groove 16, accompanied by a filling volume 15 also comprised within said bottom wall.

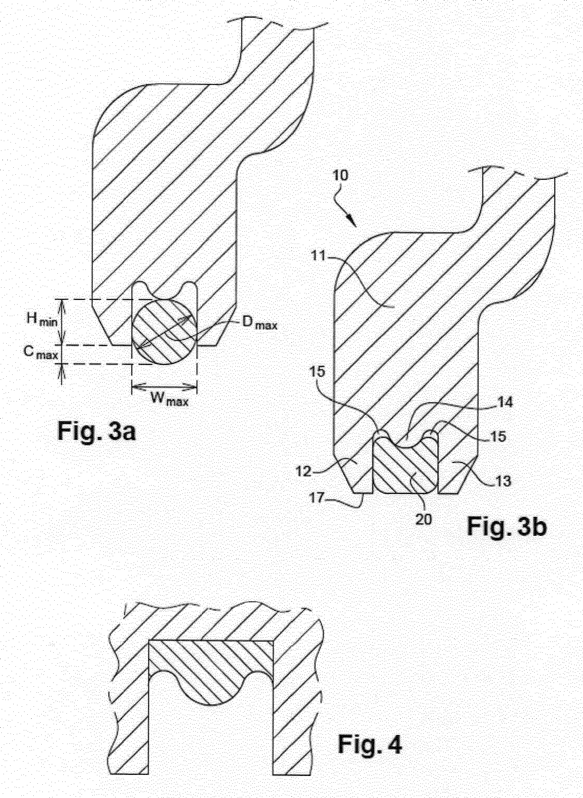

Fig. 3a and 3b present arrangement according to the invention in a cross-sectional view in a plane perpendicular to the general run of the groove 16 with the gasket 20. More specifically, Fig. 3a presents the arrangement with a gasket before assembly, and Fig. 3b presents the arrangement after assembly, with a compressed gasket. In Fig. 3a, H_min denotes a distance between the level of terminal surface 17 of the foot 11, namely surface of the foot 11 in contact with foot receiving surface 33, and the top (terminal point) of the protrusion 14. D_max denotes a lateral width of the gasket. In this case, it denotes the diameter of the gasket. W_max denotes a distance between side walls 12, 13 of the groove 16. C_max denotes a part of the gasket 20 that would protrude beyond the groove 16 before compression, after its placement inside the groove.

Below there are presented formulas, according to which a cross-sectional area A_{FV} of the filling volume 15 of the groove 16 can be calculated for a groove with flat and parallel side walls.
1) *Hₘᵢₙ* = *Dₘₐₓ*(1 - *α*)
2) *Wₘₐₓ* = *Dₘₐₓ*(1 *- β*)
3) *A_{FV}* ≥ *X* ∗ *A_{G}* - *Hₘᵢₙ* ∗ *W_{mαx}*

α denotes a desired compression rate. In general, it will be less than 1 (in other words less than 100%). Preferably its value is 0,4. Other values are also foreseen. Compression rate depends on requirements of specific project, and can also depend on specific gasket type.

β denotes a coefficient selected for ensuring that the gasket will not fall out of the groove during assembly, by making the groove equal or slightly narrower than the minimum diameter of the uncompressed gasket. It is selected after taking into account assumed tolerances. In general, it will be less than 1. Preferably, it is selected from values between 0,01 and 0,1. It is to be noted that the width of the groove does not have to be narrower than the gasket at whole its length. It can advantageously be narrower, as described by equation 2, only in selected places along the run of the groove.

A_{FV} denotes a cross-sectional area of the filling volume 15, which should be provided to achieve filling rate δ <100% at given compression rate α. A_{G} denotes a cross-sectional area of the uncompressed gasket. X denotes a coefficient which can be selected to ensure the condition. To satisfy the above-mentioned requirements, X should be greater than 1. It can for example be 1,1.

Equation 1 allows to calculate the distance between the top of the protrusion 14 and the level of terminal surface 17 of the foot 11, which is adjacent the foot receiving surface 33, for a selected compression rate α.

Equation 2 allows to calculate distance between side walls 12, 13 of the groove 16, while taking into account a value selected for ensuring that the gasket will not fall out of the groove during assembly.

Equation 3 allows to calculate a cross-sectional area of the filling volume 15, which should be provided to achieve filling rate δ < 100% at given compression rate a.

In an exemplary embodiment, those values could for example be:
D_max = 2,9mm, H_min = 1,74mm, W_max = 2,7mm for β = 0,068, α = 0,4, X = 1,1 which would give A_{FV} = 2,56 mm².

The present invention is applicable for tanks made of any material. Preferably, the protrusion 14 is convex, to facilitate even distribution of pressure. The filling volume 15 (i.e. the compression arrangement) can be produced, depending on what material is used for the tank, by injection technique, machining technique, as a molded structure. The compression arrangement can be produced as a separate element, for example comprising a protrusion and a filling volume as described, attached to the bottom of the groove in the tank's foot, as shown in Fig. 4. In such case, the compression arrangement can complement the shape of the bottom wall and/or the side walls of any groove, preferably any groove of rectangular cross-section. In other words, the parts of the attached compression arrangement which do not face the gasket are in direct contact with the groove.

Preferably, the filling volume 15 is divided by the protrusion 14 along the bottom wall of the groove 16.

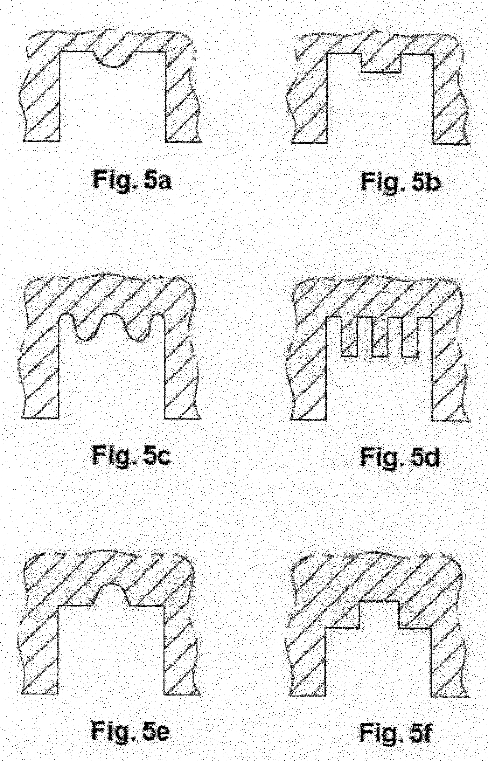

Figs. 5a-5f present another examples of compression arrangements. In Fig. 5a, the compression arrangement comprises a protrusion of a convex cross-section, with filling volumes at its sides. In Fig. 5b, the compression arrangement comprises a protrusion of a rectangular cross-section, with filling volumes at its sides. In Fig. 5c, the compression arrangement comprises two parallel protrusions of arched shape, with a filling volume between them and filling volumes between the protrusions and side walls of the groove. In Fig. 5d, the compression arrangement comprises a series of protrusions of rectangular cross-section, with filling volumes between them and filling volumes between the protrusions and side walls of the groove. In Fig. 5e, the compression arrangement comprises a groove with a filling volume of a concave cross-section. In Fig. 5f, the compression arrangement comprises a groove with a filling volume of a rectangular cross-section. In other words, the compression arrangement can be situated in the groove 16 and comprise a first surface and a second surface, wherein the first surface is closer to the foot receiving surface than the second surface. In yet another words, the distance between the first surface and the foot receiving surface is smaller than the distance between the second surface and the foot receiving surface. Such arrangement of surfaces within the groove allows to provide a desired filling rate and compression of the gasket. The first surface provides compression of the gasket, and the second surface provides a filling volume for the material of the gasket. The filling volume is selected so as to ensure filling rate below 100%, preferably below 90%.

Because the side walls 12, 13 of the foot 20 both contact the foot receiving surface 33, they serve as stoppers. In other words, the walls of the foot 20 which constitute the groove 16 both directly contact the foot receiving surface 33. This contact is ensured to occur without any obstacles. An example of such obstacle is a fragment of gasket, which has a filling rate δ higher than 100%, that is a gasket part of which escaped from the groove 16 after compression. This direct contact of the side wall 12, 13 with the foot receiving surface 33 of the collector 30 allows to achieve a precise and defined compression rate α.

A preferred gasket material is silicone, EPDM: The invention however applies to gasket of other materials as well.

## Claims

1. A heat exchanger comprising a tank (10) and a collector plate (30) assembled together, the tank (10) comprising a foot (11) and the collector (30) comprising a receiving groove in the shape of a U which comprises a base and two flanges (31, 32), the base being a foot receiving surface (33), wherein the foot (11) comprises a groove (16) in which a gasket is placed (20), and which groove (16) is faced by a foot receiving surface (33) so that together they form a closed cavity within the foot (11) defining a compression volume for the gasket (20), and **characterised in that** the foot (11) comprises a compression arrangement (14) providing a filling rate δ of the compressed gasket (20) after assembly less than 100% of the compression volume.

2. A heat exchanger according to claim 1, wherein the compression arrangement providing a filing rate δ of the compressed gasket (20) after assembly less than 90% of the compression volume.

3. A heat exchanger according to claim 1 or 2, wherein the groove (16) comprises two side walls (12, 13) and a bottom wall.

4. A heat exchanger according to claim 3, wherein the collector (30) comprises a side flange (32) with crimping tabs (34) crimped onto the foot (11) so that the side walls (12, 13) press onto the foot receiving surface (33).

5. A heat exchanger according to any of previous claims, wherein the compression arrangement is situated in the groove (16) and comprises a first surface and a second surface, wherein the first surface is closer to the foot receiving surface (33) than the second surface.

6. A heat exchanger according to any of claims 3-5, wherein the compression arrangement is situated on the bottom wall of the groove (16).

7. A heat exchanger according to any of claims 3-6, wherein the bottom wall of the groove (16) comprises a protrusion (14), protruding towards the foot receiving surface (33), and a filling volume (15).

8. A heat exchanger according to any of claims 3-7, wherein side walls (11, 12) of the groove (16) are parallel to each other.

9. A heat exchanger according to any of claims 3-8, wherein side walls (11, 12) are flat.

10. A heat exchanger according to any of claims 7-9, wherein the filling volume (15) is divided by the protrusion (14) along the bottom wall of the groove (16).

11. A heat exchanger according to any of previous claims, wherein the compression arrangement is a separate element attached to the bottom of the groove (16) in the tank's foot (11).

12. A heat exchanger according to claim 11, wherein the compression arrangement complements the shape of the bottom wall/or the side walls of the groove in which it is placed.

## Patentansprüche

1. Wärmetauscher, umfassend einen Kasten (10) und eine Kollektorplatte (30), die aneinandergefügt sind, wobei der Kasten (10) einen Fuß (11) umfasst und der Kollektor (30) eine Aufnahmenut in der Form eines U umfasst, die eine Basis und zwei Flansche (31, 32) umfasst, wobei die Basis eine Fußaufnahmefläche (33) ist, wobei der Fuß (11) eine Nut (16) umfasst, in der eine Dichtung (20) angeordnet ist, und wobei der Nut (16) eine Fußaufnahmefläche (33) derart zugewandt ist, dass sie zusammen einen geschlossenen Hohlraum in dem Fuß (11) bilden, der ein Kompressionsvolumen für die Dichtung (20) definiert, und **dadurch gekennzeichnet, dass** der Fuß (11) eine Kompressionsanordnung (14) umfasst, die eine Füllrate δ der komprimierten Dichtung (20) nach Zusammenbau von weniger als 100 % des Kompressionsvolumens bereitstellt.

2. Wärmetauscher nach Anspruch 1, wobei die Kompressionsanordnung eine Füllrate δ der komprimierten Dichtung (20) nach Zusammenbau von weniger als 90 % des Kompressionsvolumens bereitstellt.

3. Wärmetauscher nach Anspruch 1 oder 2, wobei die Nut (16) zwei Seitenwände (12, 13) und eine untere Wand umfasst.

4. Wärmetauscher nach Anspruch 3, wobei der Kollektor (30) einen Seitenflansch (32) mit Falzlaschen (34) umfasst, die auf den Fuß (11) derart gefalzt sind, dass die Seitenwände (12, 13) auf die Fußaufnahmefläche (33) drücken.

5. Wärmetauscher nach einem der vorhergehenden Ansprüche, wobei sich die Kompressionsanordnung in der Nut (16) befindet und eine erste Fläche und eine zweite Fläche umfasst, wobei die erste Fläche näher an der Fußaufnahmefläche (33) ist als die zweite Fläche.

6. Wärmetauscher nach einem der Ansprüche 3-5, wobei sich die Kompressionsanordnung an der unteren Wand der Nut (16) befindet.

7. Wärmetauscher nach einem der Ansprüche 3-6, wobei die untere Wand der Nut (16) einen Vorsprung (14), der hin zu der Fußaufnahmefläche (33) hervorragt, und ein Füllvolumen (15) umfasst.

8. Wärmetauscher nach einem der Ansprüche 3-7, wobei Seitenwände (11, 12) der Nut (16) parallel zueinander sind.

9. Wärmetauscher nach einem der Ansprüche 3-8, wobei Seitenwände (11, 12) flach sind.

10. Wärmetauscher nach einem der Ansprüche 7-9, wobei das Füllvolumen (15) durch den Vorsprung (14) entlang der unteren Wand der Nut (16) geteilt ist.

11. Wärmetauscher nach einem der vorhergehenden Ansprüche, wobei die Kompressionsanordnung ein separates Element ist, das an der Unterseite der Nut (16) in dem Fuß (11) des Kastens angebracht ist.

12. Wärmetauscher nach Anspruch 11, wobei die Kompressionsanordnung die Form der unteren Wand/oder der Seitenwände der Nut, in der sie angeordnet ist, komplementiert.

## Revendications

1. Échangeur de chaleur comprenant une boîte (10) et une plaque de collecteur (30) assemblées ensemble, la boîte (10) comprenant un pied (11) et le collecteur (30) comprenant une rainure de réception sous la forme d'un U qui comprend une base et deux brides de fixation (31, 32), la base étant une surface de réception de pied (33), dans lequel le pied (11) comprend une rainure (16) dans laquelle un joint est placé (20), et laquelle rainure (16) est en face d'une surface de réception de pied (33) de telle sorte qu'elles forment ensemble une cavité fermée à l'intérieur du pied (11) définissant un volume de compression pour le joint (20), et **caractérisé en ce que** le pied (11) comprend un agencement de compression (14) fournissant un taux de remplissage δ du joint comprimé (20) après assemblage inférieur à 100 % du volume de compression.

2. Échangeur de chaleur selon la revendication 1, dans lequel l'agencement de compression fournit un taux de remplissage δ du joint comprimé (20) après assemblage inférieur à 90 % du volume de compression.

3. Échangeur de chaleur selon la revendication 1 ou 2, dans lequel la rainure (16) comprend deux parois latérales (12, 13) et une paroi de fond.

4. Échangeur de chaleur selon la revendication 3, dans lequel le collecteur (30) comprend une bride de fixation latérale (32) avec des onglets de sertissage (34) sertis sur le pied (11) de telle sorte que les parois latérales (12, 13) pressent sur la surface de réception de pied (33).

5. Échangeur de chaleur selon l'une quelconque des revendications précédentes, dans lequel l'agencement de compression est situé dans la rainure (16) et comprend une première surface et une deuxième surface, la première surface étant plus proche de la surface de réception de pied (33) que la deuxième surface.

6. Échangeur de chaleur selon l'une quelconque des revendications 3 à 5, dans lequel l'agencement de compression est situé sur la paroi de fond de la rainure (16).

7. Échangeur de chaleur selon l'une quelconque des revendications 3 à 6, dans lequel la paroi de fond de la rainure (16) comprend une protubérance (14), dépassant vers la surface de réception de pied (33), et un volume de remplissage (15).

8. Échangeur de chaleur selon l'une quelconque des revendications 3 à 7, dans lequel les parois latérales (11, 12) de la rainure (16) sont parallèles l'une à l'autre.

9. Échangeur de chaleur selon l'une quelconque des revendications 3 à 8, dans lequel les parois latérales (11, 12) sont plates.

10. Échangeur de chaleur selon l'une quelconque des revendications 7 à 9, dans lequel le volume de remplissage (15) est divisé par la protubérance (14) le long de la paroi de fond de la rainure (16).

11. Échangeur de chaleur selon l'une quelconque des revendications précédentes, dans lequel l'agencement de compression est un élément séparé attaché au fond de la rainure (16) dans le pied de la boîte (11).

12. Échangeur de chaleur selon la revendication 11, dans lequel l'agencement de compression complémente la forme de la paroi de fond et/ou des parois latérales de la rainure dans laquelle il est placé.
